# EUROPEAN PATENT SPECIFICATION

(11) **EP 3 863 877 B1**
(45) Date of publication and mention of the grant of the patent: **26.07.2023**
(21) Application number: 19783479.9
(22) Date of filing: 02.10.2019
(51) Int. Cl.: B60K 1/02, B60K 25/00, B60K 25/06, B60K 17/28, B60K 17/356

(54) **UTILITY VEHICLE DRIVELINE**
NUTZFAHRZEUGANTRIEBSSTRANG
TRANSMISSION DE VÉHICULE UTILITAIRE

(30) Priority: 11.10.2018 GB 201816587
(43) Date of publication of application: 18.08.2021
(73) Proprietor: AGCO International GmbH, 8212 Neuhausen am Rheinfall (CH)
(72) Inventor: BREU, Wolfgang, 87616 Marktoberdorf (DE); GRITSCH, Stefan, 87616 Marktoberdorf (DE)
(74) Representative: AGCO Intellectual Property Department
(86) International application number: PCT/EP2019/076691
(87) International publication number: WO 2020/074340

(56) References cited:
- DE-U1- 29 724 646
- JP-A- 2013 203 377
- RU-C1- 2 654 743
- US-A1- 2009 301 799
- US-A1- 2012 115 668

## Description

The present invention relates to driveline/transmission systems for utility vehicles, particularly self-propelled agricultural machines such as farm tractors, and more particularly to such systems for electrically powered vehicles.

It is known that conventional agricultural vehicles such as tractors powered by internal combustion engines are not ecologically efficient due to the high volumes of fossil fuels consumed during operation. Furthermore, despite the legal imposition of increasingly stringent exhaust gas emission standards, generated pollution from such vehicles continues to be a concern. With the expectation that future legislation will only be more stringent, cleaner (more fuel efficient/less polluting) solutions such as hybrid or fully electric vehicles are desired.

United States patent US 8,469,127 describes an example of a hybrid drive line for an agricultural or industrial utility vehicle, such as a tractor. The driveline includes a drive assembly which generates a mechanical torque by means of an internal combustion engine and first, second and third electric motors. The drive assembly has a first mechanical output shaft, driven by the second electric motor, which serves to drive at least one vehicle axle, and a second mechanical output shaft in the form of a power take-off (PTO) shaft. The internal combustion engine and first electric motor are each coupled to drive the second mechanical output shaft (PTO).

In one configuration of the driveline of US 8,469,127, first and second electric motors are positioned adjacent one another (with driveshafts parallel and spaced apart) with the respective output driveshafts drivingly connected to one of the sun and planetary gears of an epicyclic gear arrangement, via one or more gear linkages for spatial reasons, with the outer epicylic ring gear driving the first output shaft and axle or axles of the vehicle, and the sun gear driving the second output shaft and the PTO. The third and, in some configurations, fourth electric motors are connected or connectable into the motive power portion of the driveline (to one or both of the front and rear axles) downstream of the drive to the PTO.

Whilst it is understood that such a hybrid arrangement is more ecologically efficient in terms of reduced pollution through reduced fossil fuel usage and hence reduced emissions, the above-described arrangement is wasteful and costly in terms of the number of components (up to four electric motors in addition to an internal combustion engine) and causes problems from simply trying to physically accommodate them all in the relatively constrained space available under a tractor hood. It is an aim of tractor manufacturers to keep the profile of the hood as low as possible to improve the users view of the area in front of the vehicle and to either side of the hood around the front wheels. Control issues also become a problem in an arrangement such as that of US 8,469,127 with the need for coordination of the output speeds of the internal combustion engine and at least the first electric motor to ensure that the first electric motor is not being effectively driven in reverse (i.e. acting as a generator).

The per-vehicle fossil fuel usage and emissions issue is addressed at least partially by a fully electric vehicle, with pure electrical drives being more efficient (less energy wasting) than internal combustion engines. Some spatial concerns remain as the space currently filled by an internal combustion engine (and conventional gearbox or continuously variable transmission (CVT)) in a conventional vehicle is instead given over to storage batteries (as it is understandably a goal that a working farm tractor should not have to return to base for recharging part-way through a working day) and power electronics for control of the electric motors. The latter may be simplified or avoided in a so-called intermediate hybrid in which a fully electric power source, operating at one or a limited range of speeds, is coupled with a conventional CVT, but it is also expected that ongoing developments in battery technology will continue to reduce the physical volume required to accommodate rechargeable battery storage sufficient to supply increasing capabilities of a working vehicle for a full day's work without recharging.

In accordance with the invention there is provided a driveline for a utility vehicle as defined in claim 1. Preferred embodiments are defined in the dependent claims.

Preferably, the second hydraulic pump is drivingly connected to at least one of the axles of the vehicle. As will be described further below, this provides for emergency braking when the electric motors are offline and the vehicle is rolling under its own inertia.

The second output shaft is suitably coupled with the epicyclic sun gear and drivingly coupled with the power take-off of the vehicle. In such an arrangement, the second output shaft suitably includes a clutch mechanism operable to selectively connect and disconnect the epicyclic sun gear and driven feature of the vehicle: the clutch mechanism is preferably configured to be further operable as a brake preventing rotation of the second shaft.

Although they may be separate, it is preferred that the first and second reservoirs comprise a common source of hydraulic fluid.

For reasons of compactness, the first and second electric drive motors may be attached to each other and the first and second input shafts are preferably coaxial. Additionally, the first and second drive motors may suitably be contained within a single housing, which housing may also enclose the epicyclic gear arrangement.

Preferably, one or each of the first input shaft and second input shaft includes a step down gearing between the respective electric drive motor and the epicyclic gear arrangement.

The driveline may further include a shifting gear arrangement operable to effect two or more speed ratios in the driving coupling between the epicyclic sun gear and the driven feature and/or between the first output shaft and the drive to one or more driven axles of the vehicle. A brake mechanism may be provided to selectively prevent or permit rotation of one or both of the first and second input shafts.

The present invention further comprises a utility vehicle including a driveline as recited above.

A further benefit from the adoption of a fully electric driveline for an agricultural vehicle links to the increasing number of farmers having their own electric source for charging (or local access to the same) in the form of a biogas plant producing relatively cheap electricity from farmed organic material.

Further advantages of the invention will become apparent from reading the following description of specific embodiments with reference to the appended drawings in which:-
Figure 1 is a representation of an agricultural/utility vehicle, in the form of a tractor, provided with a driveline according to one or more embodiments of the present invention;
Figure 2 is a schematic view of a first embodiment of driveline of the vehicle of Fig. 1;
Figure 3 is a schematic view of a further embodiment of driveline of the vehicle of Fig. 1;
Figure 4 is a schematic view of a third embodiment of driveline of the vehicle of Fig. 1;
Figure 5 is a schematic view of a fourth embodiment of driveline of the vehicle of Fig. 1;
Figure 6 is a schematic view of a fifth embodiment of driveline of the vehicle of Fig. 1;
Figure 7 is a schematic view of a sixth embodiment of drive line of the vehicle of Fig. 1;
Figure 8 is a schematic view of a seventh embodiment of driveline of the vehicle of Fig. 1; and
Figure 9 is a schematic view of an eighth embodiment of drive line of the vehicle of Fig. 1.

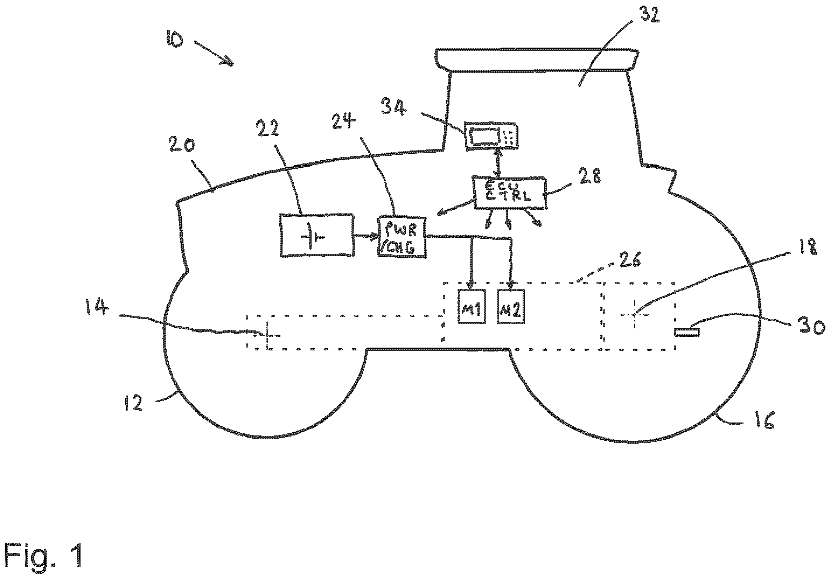

Figure 1 schematically illustrates an agricultural vehicle 10 in the form of a tractor, having front wheels 12 driven by a front axle 14, rear wheels 16 driven by a rear axle 18, a front hood 20 covering inter alia a storage battery 22 coupled via a power electronics (switching/charging) stage 24 to first and second electric motors M1, M2. The electric motors M1, M2 form part of a drive line (indicated generally by dashed line 26) providing motive power to the front and rear axles 14, 18 under control of an electronic control unit (ECU) 28. The driveline 26 also includes a power take-off shaft 30 which outputs a driven rotary drive to implements such as balers, tedders etc. coupled to the rear of the tractor. The tractor 10 includes a user station in the form of a cab 32 which may suitably comprise a user interface/control unit 34 by means of which a user may set or adjust operational parameters via the ECU 28.

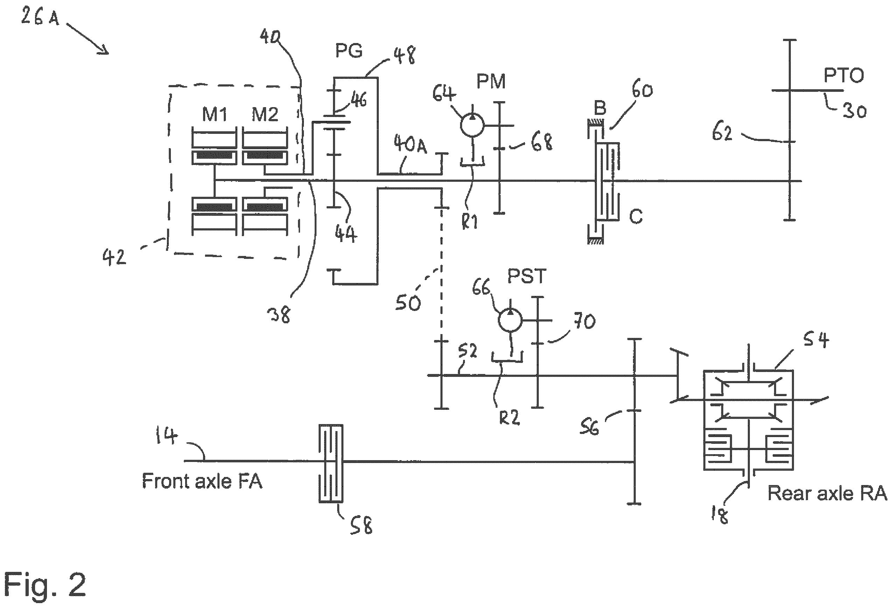

Figure 2 shows a first configuration 26A of the driveline 26 embodying aspects of the present invention. The first M1 and second M2 electric drive motors are close coupled (connected to each other) with their respective output shafts 38, 40 being coaxial. This makes the motive power unit (M1 + M2) a compact unit that may be contained within a low profile single housing, illustrated by dashed line 42.

Mounted adjacent the motive power unit M1, M2 is an epicyclic (planetary) gear arrangement PG (which may optionally be enclosed within the single housing 42) with the first input shaft 38 directly (drivingly) coupled to the sun gear 44 thereof, and the second input shaft 40 directly coupled to one or more of the planetary gears 46 of the epicyclic PG. The outer ring gear 48 of the epicyclic PG is directly coupled to a first output shaft 40A and from there, via one or more connecting gears 50, drives an input shaft 52 of the drive to the front and rear axles 14, 18. The output shaft 52 is connected via a differential and braking unit 54 to the rear axle 18, and via a gearing linkage 56 and clutch unit 58 to the front axle 14.

The second output shaft 38 (an extension of the first input shaft and suitably a unitary body therewith) is connected via a brake and clutch unit 60 to a reduction gearing 62 which in turn drives the PTO output shaft 30. The clutch portion C of the brake and clutch unit 60 is operable to connect/disconnect the PTO shaft 30 from the second output shaft 38. The brake portion B of the brake and clutch unit 60 is on the motor side (relative to the clutch portion C) and, when actuated, prevents rotation of the second output shaft 38 and first electric motor M1.

The first electric motor M1 drives a main hydraulic pump PM 64 via the second output shaft 38 and a gearing linkage 68. The main pump 64 supplies pressurised fluid from a first fluid reservoir R1 to consumers on or attached to the vehicle e.g. lifting cylinders forming part of a front or rear linkage, a front loader, and/or a front suspension of the vehicle.

The second electric motor M2 drives a steering hydraulic pump PST 66 via the input shaft 52 and a gearing linkage 70. The steering pump 66 supplies pressurised fluid from a second fluid reservoir R2 (which may be separate from or common with R1) to a hydraulic steering system of the vehicle/ tractor (as described in further detail below).

This arrangement of hydraulic supply for the steering system provides an improvement over current tractors that are conventionally supplied with three pumps to provide fluid to the steering system.

During road operation of such current tractors, the steering system is supplied by the main pump (driven by the engine) which is additionally supplying fluid to the lifting cylinders, the CVT transmission or the front suspension of the vehicle. If e.g. in the field, the main pump is overloaded (by the demand of the implement), a second pump (also driven by the engine) helps to ensure steering capability. For the case where the engine is stalled and the vehicle is still moving, a third pump (driven by the wheels) steps in to provide fluid pressure to allow emergency steering. In a battery driven vehicle however, with the challenge of limited energy storage, such an arrangement reduces working hours as the series of pumps are run in parallel. In the present arrangement a wheel driven steering pump PST 66 (for supply to the hydraulic steering system) is provided in the driveline to the rear axle (via the first output shaft 40A) driven by the second electric motor M2 or by freewheeling rotation of at least the rear axle 18. This configuration has the major advantage that the steering pump PST 66 is always delivering fluid to ensure emergency steering - even when the electric motors M1, M2 are not powered and the vehicle is moving under inertia or through gravity due to the vehicle being on a slope.

The main pump PM 64 (supplying fluid to e.g. the lifting cylinders or the front suspension) is installed in the driveline connected to motor M1 but prior to the clutch/brake assembly 60 connecting the PTO 30 in this first embodiment. This has some major advantages:
1. Only one pump (i.e. 66) is required to ensure steering and that pump is constantly driven;
2. Installing the main pump 64 in the driveline connected with M1 enables this main pump 64 to be switched off e.g. when driving on the road where there is minor hydraulic consumption compared to field work. In the case that increased steering power is requested (e.g. when turning), the motor M1 may be activated while the PTO 30 branch is disconnected by the clutch part C of the brake/clutch assembly 60.
3. In the case where the tractor is operated with an implement, both the main pump PM 64 and the PTO 30 may be operated.

The arrangement of Fig. 2 enables the following five operating modes:

| | | | | PTO | |
|---|---|---|---|---|---|
| | Operating condition | M1 | M2 | B | C |
| 1 | **FWD-Drive** / **no PTO** / **<12kph:** | | X | X | |
| | M2 >0; M1=0, B engaged, C disengaged, | | | | |
| 2 | **FWD-Drive** / **no PTO** / **>12 kph:** | X | X | | |
| | M2 >0; M1>0, B disengaged, C disengaged, | | | | |
| 3 | **FWD-Drive** / **PTO** / **4 - 12 kph:** | X | X | | x |
| | M2 >0; M1>0, B disengaged, C disengaged, | | | | |
| 4 | **RWD-Drive/ no PTO** / **<12kph:** | | X | X | |
| | See 1, M2 turning counterwise | | | | |
| 5 | **Standstill with PTO** | X | | | X |

The presence of brake B in the brake/clutch assembly 60 enables the driveline to be driven by motor M2 exclusively (when brake B is actuated to lock M1), or by both motors M1 and M2 conj ointly.

Depending on the intended speed range of the vehicle, the arrangement of Fig. 2 may have limitations. With a large range of intended vehicle speeds such as 0 - 60 kph - the electric motors M1 and M2 (or at least M2) must be provided with a wide operating range (high spread) of at least 10:1 so that the vehicle speed range can be realized. A type of electric machine (motor) to provide such a spread is a switched reluctance motor (SR-motor). If such motors are not available, a further shifting gear SG-T may be integrated in the driveline as described below.

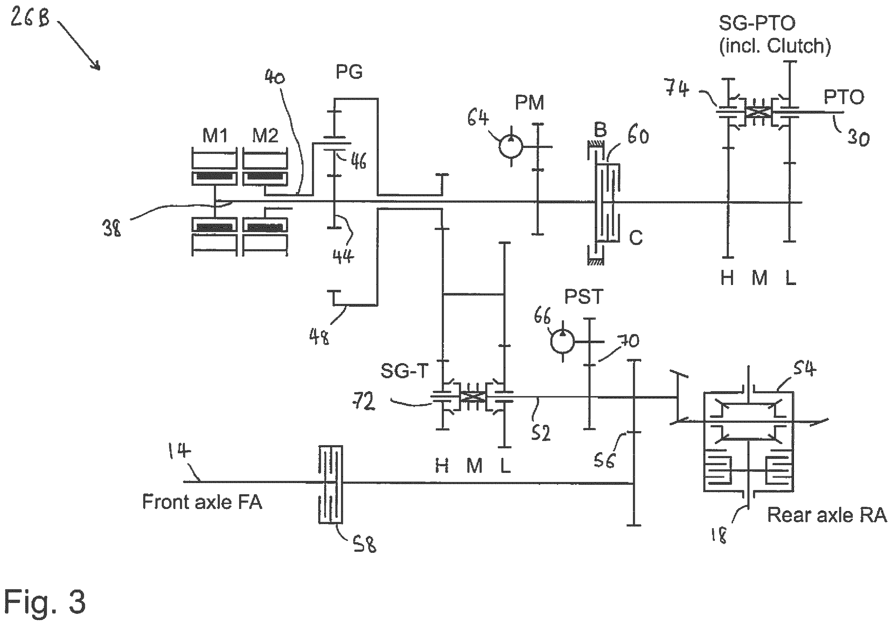

Figures 3 to 9 illustrate further embodiments of vehicle driveline suitable for the vehicle of Fig. 1. Where components are unchanged and perform the same function, they are identified by the same reference numerals and will not be again further described.

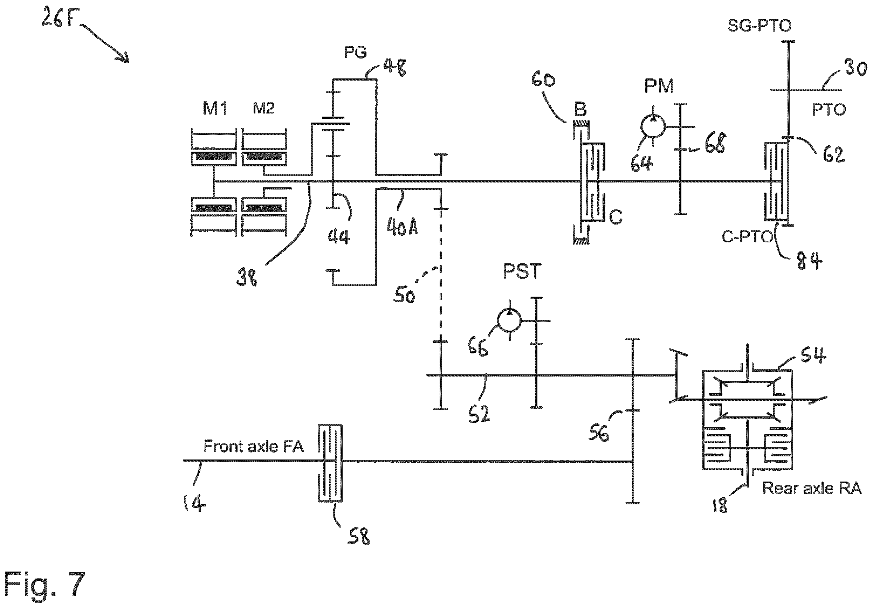

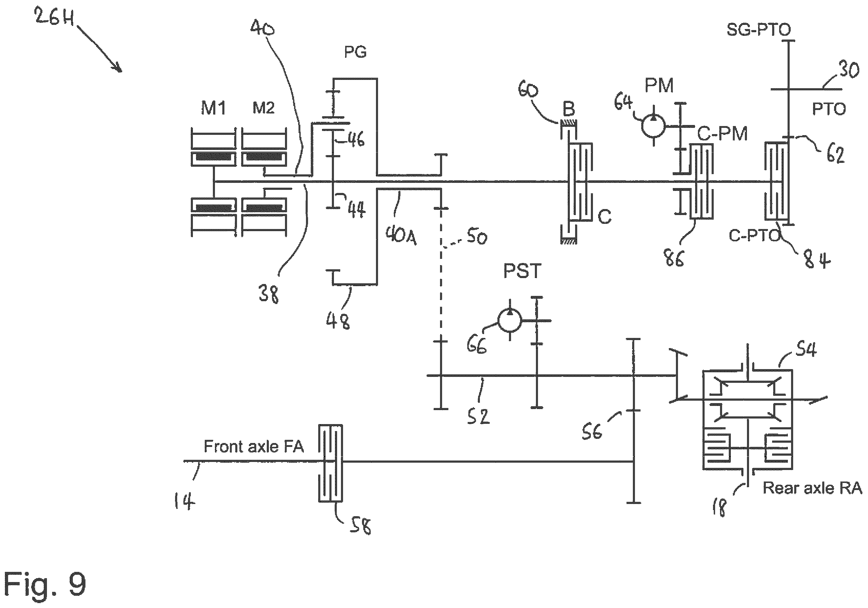

Figure 3 illustrates a second embodiment 26B of the driveline 26. In this arrangement, the direct gearing link 50 between the epicylic ring gear 48 and input shaft 52 of Fig. 2 is replaced with a shifting gear arrangement SG-T 72 which is operable to provide three different gear ratios (suitably denoted as High, Medium and Low H, M, L range) driving the input shaft 52. Such an arrangement provides a greater range of operating speeds where the electric motors M1 and M2 have a limited operating speed range. In like manner, the direct gearing link 62 to the PTO 30 is replaced by a further shifting gear arrangement SG-PTO 74 operable to provide three different gear ratios (H, M, L) driving the PTO 30 from the first electric motor M1. The shifting gear arrangement SG-PTO 74 may also provide a neutral position in which the PTO 30 is undriven, or dedicated clutch mechanisms to provide disengagement may alternately be provided (see e.g. Figs. 7 and 9 below).

The arrangement of Figure 3 enables the following operating modes:

| | | | | SG-T 72 | | | Brake/Clutch 60 | |
|---|---|---|---|---|---|---|---|---|
| | Operating condition | M1 | M2 | L | H | M | B | C |
| 1 | **FWD-Drive** / **no PTO** / **<12kph:** | | X | X | | | X | |
| | M2 >0; M1=0, B engaged, C | | | | | | | |
| | disengaged, switching gear 72 L | | | | | | | |
| 2 | **FWD-Drive** / **no PTO** / **12** - **16 kph:** | X | X | X | | | | |
| | M2 >0; M1>0, B disengaged, C disengaged, switching gear 72 L | | | | | | | |
| 3 | **FWD-Drive** / **no PTO / 16** - **30 kph:** | | X | | X | | X | |
| | M2 >0; M1=0, B engaged, C disengaged, switching gear 72 H | | | | | | | |
| 4 | **FWD-Drive** / **no PTO** / **30** - **40 kph:** | X | X | | X | | | |
| | M2 >0; M1>0, B disengaged, C disengaged, switching gear 72 H | | | | | | | |
| 5 | **FWD-Drive** / **PTO** / **4** - **12 kph:** | X | X | X | | | | X |
| | M2 >0; M1>0, B disengaged, C disengaged, switching gear 72 L | | | | | | | |
| 6 | **RWD-Drive/ no PTO** / **<12kph:** | | X | X | | | X | |
| | See 1, M2 turning counterwise | | | | | | | |
| 7 | **Standstill with PTO** | X | | | | X | | X |

As above, assuming the speed range of motor M1 is not large enough to supply a wide range of PTO speeds, the PTO 30 is provided with a shifting gear SG-PTO 74. The concept of connecting the two electric motors M1 and M2 with a planetary gear has a potential issue in that actively driving one motor may result in unmeant rotation of the other motor so that this other motor works as a generator. This may be the case during PTO 30 operation when the vehicle is in stand-still mode. The torque supplied by M1 may result in part of that torque turning M2 via the epicyclic planetary gear PG, e.g. if the load on PTO is excessively high. In such a case, M2 is operated as generator and voltage would be brought into the internal HV network.

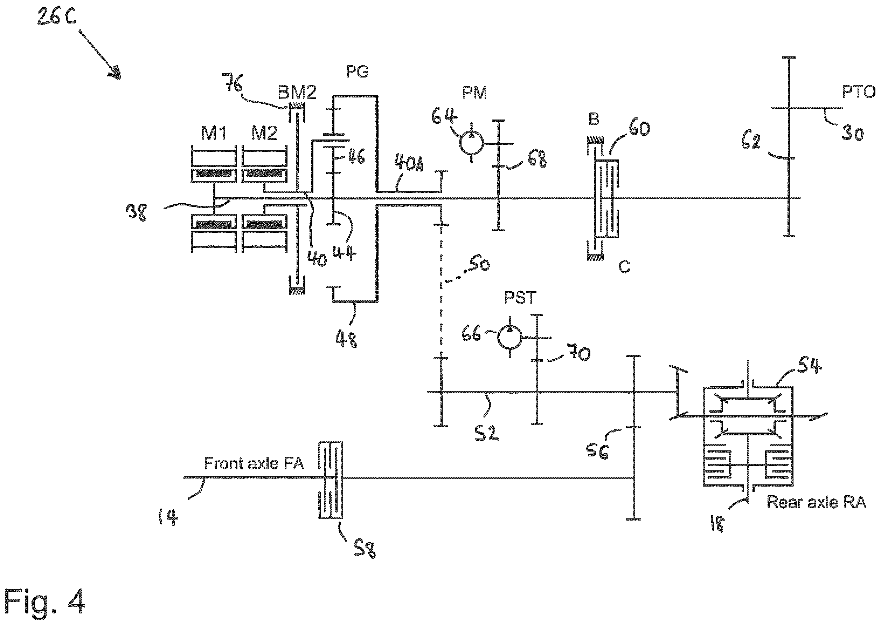

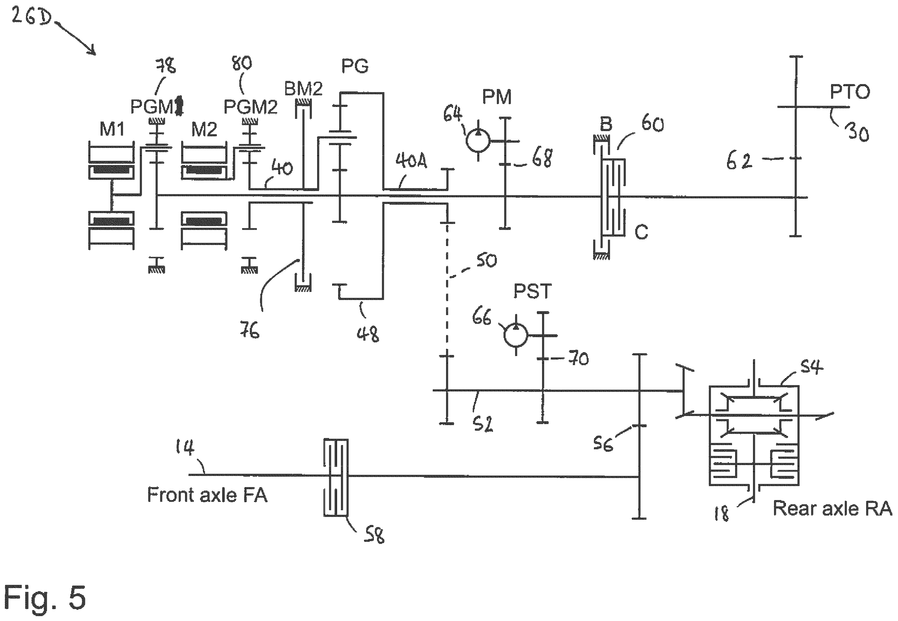

M1 is not affected in this scenario as brake B of brake/clutch unit 60 is already provided to lock motor M1 which thereby avoids generator operation. If electric motor M2 is of a type which enables safe adjustment of zero speed (such as an SR-motor as mentioned above) , this problem is solved. Otherwise, e.g. if a permanent synchron type machine is used, the driveline 26 may be equipped with a brake 76 to lock motor M2 as shown in e.g. Figs. 4 and 5 below.

Figure 4 illustrates a third embodiment 26C of the driveline 26. In this arrangement, the second output shaft 40A, directly coupling the second motor M2 to one or more of the planetary gears 46 of the epicyclic PG, is provided with a brake 76 to lock the motor M2. As indicated above, when only the first electric motor M1 is driven, friction within the epicyclic may result in output shaft 40 being driven in reverse, causing the second motor M2 to act as a generator: application of the brake 76 prevents this. The brake 76 may be accommodated within a casing 42 for the motors M1, M2 (as described above with reference to Fig. 2) or may be mounted adjacent thereto.

Figure 5 illustrates a fourth embodiment 26D of the driveline 26. In this arrangement, as in Fig. 4, the second output shaft 40 is provided with a brake 76 to lock the motor M2. Additionally, each of the electric motors M1, M2 is provided with a respective step-down planetary gear 78, 80 connecting to the respective output shaft 38, 40. The provision of step-down gears 78, 80 enables high speed electrical motors to be used which, in additional to being generally more compact than lower speed motors, also have a wider operating speed range and remove the need for shifting gearing (e.g. as at 72, 74 in Fig. 3). The step down gears 78, 80 (and optionally also the brake 76) may be accommodated within a casing 42 for the motors M1, M2 (as described above with reference to Fig. 2).

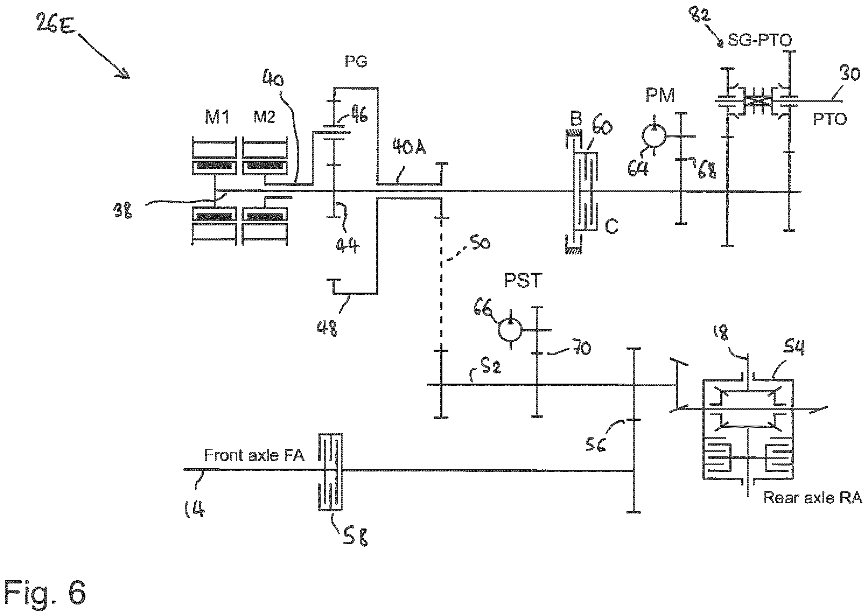

Figure 6 illustrates a fifth embodiment 26E of the driveline 26. In this arrangement, the main pump PM 64 is positioned on the PTO side of the brake/clutch arrangement 60. Additionally, the PTO 30 is driven through a shifting gear arrangement 82 which provides first and second driving gear ratios as well as having a neutral (non-driving) position. The particular advantages of this arrangement are:
1. Motors M1 and M2 can conjointly provide tractive power without driving auxiliary drives like the PTO 30 (when shifting gear arrangement 82 is in neutral or the clutch part C of brake/clutch arrangement 60 is disengaged) or hydraulics from the main pump 64 (when the clutch part C of brake/clutch arrangement 60 is disengaged).
2. As the PTO 30 is provided with the shifting gear 82 which provides a neutral position, when this neutral position is selected, main pump can 64 be driven without driving the PTO 30. Running a PTO without attachment may be seen as risk for operator injury and should generally be avoided.

Figure 7 illustrates a sixth embodiment 26F of the driveline 26. In this arrangement, which is largely identical to that of Fig. 6, the PTO 30 is not driven through a shifting gear arrangement 82, but instead through the direct gear link 62 of earlier embodiments. To enable the main pump 64 to be driven without driving the PTO 30, a further clutch mechanism 84 is provided between the pump and PTO to allow decoupling of the PTO.

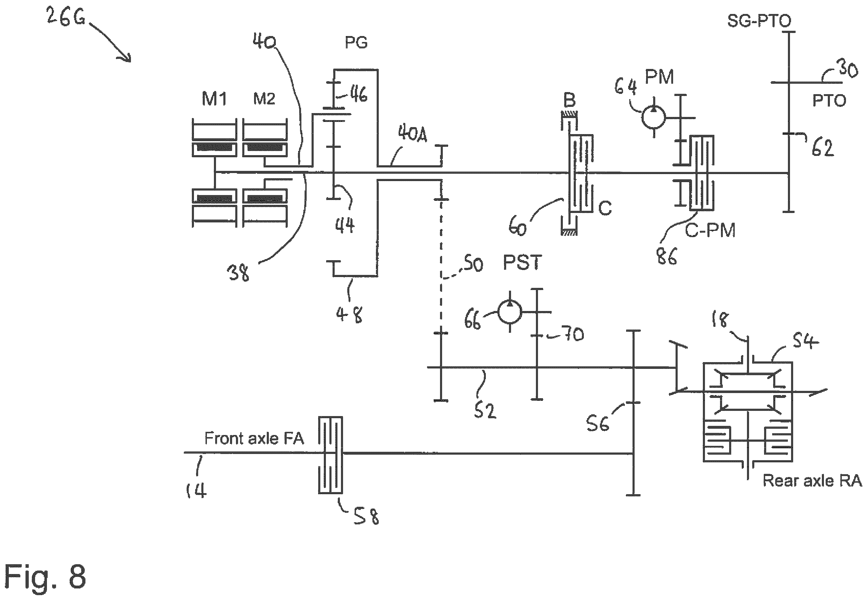

Figure 8 illustrates a seventh embodiment 26G of the driveline 26. In contrast to the arrangement of Fig. 7, the PTO 30 is permanently coupled to the output of brake/clutch assembly 60, but the main pump 64 may be disconnected by means of a respective clutch mechanism 86.

Figure 9 illustrates an eighth embodiment 26H of the driveline 26. This is a hybrid of the arrangements of Figs. 7 and 8, with both the main pump 64 and the PTO 30 being operably connected/disconnected from the output of brake/clutch assembly 60 by means of respective clutch mechanisms 84, 86.

In the foregoing the applicants have described a driveline 26 for a utility vehicle such as a farm tractor comprises an epicyclic gear arrangement PG, having a sun gear 44 engaging two or more planetary gears 46 within a ring gear 48, coupled to drive first 40A and second 38 output shafts, with the first output shaft 40A drivingly connected to one or more axles 14, 18 of the vehicle. A first electric drive motor M1 is coupled to drive a first input shaft 38 drivingly coupled with the epicyclic sun gear 44, and a second electric drive motor M2 is coupled to drive a second input shaft 40 drivingly coupled with one or more of the epicyclic planetary gears 46. The second output shaft 38 is drivingly connected to a first hydraulic pump PM 64 which provides, from a first reservoir R1, a supply of pressurised fluid to one or more consumers on or attached to the vehicle, and the first output shaft 40A is drivingly connected to a second hydraulic pump PST 66 which provides, from a second reservoir R2, a supply of pressurised fluid to a steering system of the vehicle.

From reading of the present disclosure, other modifications within the scope of the present invention as defined by the appended claims will be apparent to those skilled in the art.

## Claims

1. A driveline (26) for a utility vehicle comprising:
- an epicyclic gear arrangement (PG), having a sun gear (44) engaging two or more planetary gears (46) within a ring gear (48), coupled to drive first (40A) and second (38) output shafts, with the first output shaft (40A) drivingly connected to one or more axles (14, 18) of the vehicle;
- a first electric drive motor (M1) coupled to drive a first input shaft (38) drivingly coupled with the epicyclic sun gear (44); and
- a second electric drive motor (M2) coupled to drive a second input shaft (40) drivingly coupled with one or more of the epicyclic planetary gears (46);
**characterised in that** the second output shaft (38) is: drivingly coupled with a power take off shaft (PTO) (30) of the vehicle; and drivingly connected to a first hydraulic pump (PM 64) which first pump provides, from a first reservoir (R1), a supply of pressurised fluid to one or more consumers on or attached to the vehicle; and wherein the first output shaft (40A) is drivingly connected to a second hydraulic pump (PST 66) which second pump provides, from a second reservoir (R2), a supply of pressurised fluid to a steering system of the vehicle.

2. A driveline as claimed in claim 1, wherein the second hydraulic pump (PST 66) is drivingly connected to at least one of the axles (14, 18) of the vehicle.

3. A driveline as claimed in claim 1, wherein the second output shaft (38) includes a clutch mechanism (60) operable to selectively connect and disconnect the epicyclic sun gear (44) and driven feature of the vehicle.

4. A driveline as claimed in claim 3, wherein the clutch mechanism (60) is configured to be further operable as a brake (B) preventing rotation of the second output shaft (38).

5. A driveline as claimed in any preceding claim, wherein the first and second reservoirs (R1, R2) comprise a common source of fluid.

6. A driveline as claimed in any preceding claim, wherein the first and second electric drive motors (M1, M2) are attached to each other and the first and second input shafts (38, 40) are coaxial.

7. A drive line as claimed in claim 6, wherein the first and second drive motors (M1, M2) are contained within a single housing (42).

8. A driveline as claimed in claim 7, wherein the single housing (42) also encloses the epicyclic gear arrangement (PG).

9. A driveline as claimed in any preceding claim, wherein one or each of the first input shaft (38) and second input shaft (40) includes a step down gearing (78, 80) between the respective electric drive motor (M1, M2) and the epicyclic gear arrangement (PG).

10. A driveline as claimed in claim 1, further including a shifting gear arrangement (74) operable to effect two or more speed ratios in the driving coupling between the epicyclic sun gear (44) and the power take off shaft (30).

11. A driveline as claimed in claim 10, further including a shifting gear arrangement (72) operable to effect two or more speed ratios in the driving coupling between the first output shaft (40A) and the drive to one or more driven axles (14, 18) of the vehicle.

12. A driveline as claimed in any preceding claim, further comprising a brake mechanism (76) operable to selectively prevent or permit rotation of one or both of the first and second input shafts (38, 40).

13. A utility vehicle including a driveline as claimed in any preceding claim.

## Patentansprüche

1. Antriebsstrang (26) eines Nutzfahrzeugs mit:
- einer Planetengetriebeanordnung (PG) mit einem Sonnenrad (44), welches innerhalb eines Hohlrades (48) mit mindestens zwei Planetenrädern (46) in Eingriff steht, und welche mit einer ersten Ausgangswelle (40A) und einer zweiten Ausgangswelle (38) gekoppelt ist, wobei die erste Ausgangswelle (40A) in Antriebsverbindung mit mindestens einer Achse (14, 18) des Fahrzeugs steht;
- einem ersten elektrischen Antriebsmotor (M1), der geeignet für einen Antrieb einer ersten Eingangswelle (38), die in Antriebsverbindung mit dem Sonnenrad (44) steht, gekoppelt ist; und
- einem zweiten elektrischen Antriebsmotor (M2), der geeignet für einen Antrieb einer zweiten Eingangswelle (40), die in Antriebsverbindung mit mindestens einem Planetenrad (46) steht, gekoppelt ist;
**dadurch gekennzeichnet, dass** die zweite Eingangswelle (38): antriebsmäßig mit einer Leistungs-Abgabewelle oder Zapfwelle (PTO) (30) des Fahrzeugs gekoppelt ist, und antriebsmäßig mit einer ersten hydraulischen Pumpe (PM 64) verbunden ist, wobei die erste Pumpe aus einem ersten Behälter (R1) eine Versorgung mindestens eines Verbrauchers, der auf oder an dem Fahrzeug angeordnet ist oder hieran befestigt ist, mit druckbeaufschlagtem Fluid bereitstellt; und wobei die erste Ausgangswelle (40A) antriebsmäßig mit einer zweiten hydraulischen Pumpe (PST 66) verbunden ist, wobei die zweite Pumpe aus einem zweiten Behälter (R2) eine Versorgung eines Lenksystems des Fahrzeugs mit druckbeaufschlagtem Fluid bereitstellt.

2. Antriebsstrang nach Anspruch 1, wobei die zweite hydraulische Pumpe (PST 60) antriebsmäßig mit mindestens einer der Achsen (14, 18) des Fahrzeugs verbunden ist.

3. Antriebsstrang nach Anspruch 1, wobei die zweite Ausgangswelle (38) einen Kupplungsmechanismus (60) aufweist, der zur selektiven Verbindung und Trennung des Sonnenrades (44) und des Antriebszustandes des Fahrzeugs betreibbar ist.

4. Antriebsstrang nach Anspruch 3, wobei der Kupplungsmechanismus (60) so konfiguriert ist, dass dieser des Weiteren als Bremse (B) betätigbar ist zur Vermeidung einer Rotation der zweiten Ausgangswelle (38).

5. Antriebsstrang nach einem der vorhergehenden Ansprüche, wobei der erste und zweite Behälter (R1, R2) eine gemeinsame Fluidquelle aufweisen.

6. Antriebsstrang nach einem der vorhergehenden Ansprüche, wobei der erste und zweite elektrische Antriebsmotor (M1, M2) aneinander befestigt sind und die erste und zweite Eingangswelle (38, 40) koaxial zueinander sind.

7. Antriebsstrang nach Anspruch 6, wobei der erste und zweite Antriebsmotor (M1, M2) in einem einzigen Gehäuse (42) aufgenommen sind.

8. Antriebsstrang nach Anspruch 7, wobei das einzige Gehäuse (42) auch das Planetengetriebe (PG) aufnimmt.

9. Antriebsstrang nach einem der vorhergehenden Ansprüche, wobei die erste Eingangswelle (38) und/oder die zweite Eingangswelle (40) ein Untersetzungsgetriebe (78, 80) aufweisen, welches zwischen dem jeweiligen elektrischen Antriebsmotor (M1, M2) und der Planentengetriebeanordnung (PG) angeordnet ist.

10. Antriebsstrang nach Anspruch 1, des Weiteren mit einer Schaltgetriebeanordnung (74), die betreibbar ist, um zwei oder mehr Geschwindigkeitsverhältnisse in der Antriebskopplung zwischen dem Sonnenrad (44) und der Leistungsabgabewelle oder Zapfwelle (30) hervorzurufen.

11. Antriebsstrang nach Anspruch 10, des Weiteren mit einer Schaltgetriebeanordnung (72), die betreibbar ist, um zwei oder mehr Geschwindigkeitsverhältnisse in der Antriebskopplung zwischen der ersten Ausgangswelle (40A) und dem Antrieb der mindestens einen angetriebenen Achse (14, 18) des Fahrzeugs hervorzurufen.

12. Antriebsstrang nach einem der vorhergehenden Ansprüche, des Weiteren mit einem Bremsmechanismus (76), der betreibbar ist, um selektiv eine Rotation der ersten Eingangswelle (38) und/oder der zweiten Eingangswelle (40) zuzulassen oder zu unterbinden.

13. Nutzfahrzeug mit einem Antriebsstrang nach einem der vorhergehenden Ansprüche.

## Revendications

1. Transmission (26) de véhicule utilitaire comprenant :
un agencement d'engrenage épicycloïdal (PG), comportant un engrenage solaire (44) engrenant sur deux ou plusieurs engrenages planétaires (46) à l'intérieur d'un engrenage annulaire (48), couplé de manière à entraîner des premier (40A) et second (38) arbres de sortie, le premier arbre de sortie (40A) étant relié afin de pouvoir assurer l'entraînement à un ou plusieurs essieux (14, 18) du véhicule ;
un premier moteur d'entraînement électrique (M1) couplé de manière à entraîner un premier arbre d'entrée (38) couplé afin de pouvoir assurer l'entraînement à l'engrenage solaire d'agencement épicycloïdal (44) ; et
un second moteur d'entraînement électrique (M2) couplé de manière à entraîner un second arbre d'entrée (40) couplé afin de pouvoir assurer l'entraînement à un ou plusieurs des engrenages planétaires d'agencement épicycloïdal (46) ;
**caractérisée en ce que** le second arbre de sortie (38) est : couplé afin de pouvoir assurer l'entraînement à un arbre de prise de couple (PTO) (30) du véhicule ; et relié afin de pouvoir assurer l'entraînement à une première pompe hydraulique (PM 64), laquelle première pompe assure, à partir d'un premier réservoir (R1), une alimentation en fluide pressurisé vers un ou plusieurs consommateurs présent sur le véhicule ou relié à ce dernier ; et dans laquelle le premier arbre de sortie (40A) est relié afin de pouvoir assurer l'entraînement à une seconde pompe hydraulique (PST 66), laquelle seconde pompe assure, à partir d'un second réservoir (R2), une alimentation en fluide pressurisé vers un dispositif de commande de direction du véhicule.

2. Transmission selon la revendication 1, dans laquelle la seconde pompe hydraulique (PST 66) est reliée afin de pouvoir assurer l'entraînement à au moins l'un des essieux (14, 18) du véhicule.

3. Transmission selon la revendication 1, dans laquelle le second arbre de sortie (38) comporte un mécanisme d'embrayage (60) pouvant être utilisé afin de coupler et découpler sélectivement l'engrenage solaire d'agencement épicycloïdal (44) et le dispositif entraîné du véhicule.

4. Transmission selon la revendication 3, dans laquelle le mécanisme d'embrayage (60) est, en outre, configuré de manière à pouvoir être utilisé comme un frein (B) empêchant la rotation du second arbre de sortie (38).

5. Transmission selon l'une quelconque des revendications précédentes, dans laquelle les premier et second réservoirs (R1, R2) comprennent une source de fluide commune.

6. Transmission selon l'une quelconque des revendications précédentes, dans laquelle les premier et second moteurs d'entraînement électriques (M1, M2) sont reliés entre eux et les premier et second arbres d'entrée (38, 40) sont coaxiaux.

7. Transmission selon la revendication 6, dans laquelle les premier et second moteurs d'entraînement (M1, M2) sont contenus à l'intérieur d'un logement unique (42).

8. Transmission selon la revendication 7, dans laquelle le logement unique (42) contient aussi l'agencement d'engrenage épicycloïdal (PG).

9. Transmission selon l'une quelconque des revendications précédentes, dans laquelle un ou chacun du premier arbre d'entrée (38) et du second arbre d'entrée (40) comportent un boîtier de réduction (78, 80) entre le moteur d'entraînement électrique (M1, M2) respectif et l'agencement d'engrenage épicycloïdal (PG).

10. Transmission selon la revendication 1, comportant, en outre, un agencement de changement de vitesse (74) pouvant être utilisé afin d'assurer deux ou plusieurs rapports de réduction sur le couplage entre l'engrenage solaire d'agencement épicycloïdal (44) et l'arbre de prise de couple (30).

11. Transmission selon la revendication 10, comportant, en outre, un agencement de changement de vitesse (72) pouvant être utilisé afin d'assurer deux ou plusieurs rapports de réduction sur le couplage entre le premier arbre de sortie (40A) et l'entraînement d'un ou plusieurs essieux moteurs (14, 18) du véhicule.

12. Transmission selon l'une quelconque des revendications précédentes, comprenant, en outre, un mécanisme de freinage (76) pouvant être utilisé sélectivement de manière à empêcher ou permettre la rotation d'un seul des premier et second arbres d'entrée (38, 40) ou des deux.

13. Véhicule utilitaire comportant une transmission selon l'une quelconque des revendications précédentes.
